(19) Europäisches Patentamt
European Patent Office
Office européen des brevets

(11) **EP 1 807 484 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(51) Int Cl.:
***C09K 21/14*** *(2006.01)*      ***C09K 3/24*** *(2006.01)*
***C08K 5/00*** *(2006.01)*

(21) Anmeldenummer: **05796965.1**

(22) Anmeldetag: **14.10.2005**

(86) Internationale Anmeldenummer:
**PCT/EP2005/055282**

(87) Internationale Veröffentlichungsnummer:
**WO 2006/042830 (27.04.2006 Gazette 2006/17)**

(54) **FORMMASSE FÜR DIE HERSTELLUNG SCHWER ENTFLAMMBARER GEGENSTÄNDE, PIGMENT HIERFÜR UND DESSEN VERWENDUNG**

MOULDING MATERIAL FOR THE PRODUCTION OF FIRE-RETARDING OBJECTS, PIGMENT THEREFOR AND USE THEREOF

MATIERE MOULABLE SERVANT A PRODUIRE DES OBJETS DIFFICILEMENT INFLAMMABLES, PIGMENT POUR CETTE MATIERE MOULABLE, ET UTILISATION DE CE PIGMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.10.2004 DE 102004050479**

(43) Veröffentlichungstag der Anmeldung:
**18.07.2007 Patentblatt 2007/29**

(73) Patentinhaber: **Chemische Fabrik Budenheim KG 55257 Budenheim (DE)**

(72) Erfinder:
• **FUTTERER, Thomas 55218 Ingelheim (DE)**
• **NÄGERL, Hans-Dieter 67373 Dudenhofen (DE)**
• **MANS FIBLA, Vincens E-08915 Badalona (ES)**
• **WISSEMBORSKI, Rüdiger 55435 Gau-Algesheim (DE)**

(74) Vertreter: **Seiffert, Klaus WSL Patentanwälte Taunusstrasse 5a 65183 Wiesbaden (DE)**

(56) Entgegenhaltungen:
**EP-A- 0 764 683          WO-A-00/02869 US-B1- 6 706 785**

**EP 1 807 484 B1**

EP 1 807 484 B1

**Beschreibung**

Es ist bekannt, Kunststoffen flammhemmende Mittel in der Form feiner Teilchen zuzusetzen und diese feinen Teilchen in dem gesamten Kunststoffgegenstand oder in dessen Oberflächenbereichen zu dispergieren. Beispielsweise aus der DE-A-101 45 093 ist es bekannt, Polyphosphate organischer Stickstoffbasen, wie von Guanidin und Melamin oder Melaminderivaten als Flammschutzmittel in Kunststoffen und als Flammfestausrüstung von Textilien zu benutzen. Aus der WO 00/02869 sind Polyphosphatsalze insbesondere in glasfaserverstärkten Polyamiden und Polyestern als Flammschutzmittel bekannt. Andere organische Stickstoffbasen als Flammschutzmittel sind aus vielen weiteren Druckschriften bekannt, wobei die Tendenz der damit befaßten Industriezweige dahin geht, halogenfreie Flammschutzmittel, wie Aluminiumhydroxid, Magnesiumhydroxid oder Melamincyanurat zu diesem Zweck einzusetzen. Die US-A-6 706 785 beschreibt plättchenförmige Substrate, die mit Metalloxiden beschichtet sind und Kunststoffen als Additive für die Laserbeschriftbarkeit zugesetzt werden.

Wenn diese Flammschutzmittel in halogenfreien thermoplastischen Kunststoffen verteilt werden, kann ein nachteiliger Effekt darin bestehen, daß die Eigenschaften des Kunststoffes unerwünscht verändert werden.

Auf vielen Anwendungsgebieten ist es erwünscht, Kunststoffgegenstände, die flammfest gemacht wurden, mit Hilfe von Laserlicht beschreibbar oder markierbar zu machen, was in der Realität Schwierigkeiten ergab, insbesondere insofern, als halogenfreie flammfeste Flammschutzmittel keinen ausreichenden Kontrast zeigten, so daß ihre Verwendung sich in der Praxis nicht als brauchbar erwies. Die EP-A-0 764 683 beschreibt Kupferhydroxidphosphat enthaltende, laserbeschriftbare, thermoplastische Formmassen, die gleichzeitig Flammschutzadditive enthalten können, wobei als Flammschutzadditive Magnesiumhydroxid, Calcium-MagnesiumCarbonat-Hydrat, halogenierte Verbindungen, gegebenenfalls in Kombination mit Antimonoxiden, eingesetzt werden.

Die der Erfindung zugrundeliegende Aufgabe bestand somit darin, Kunststofformmassen zu bekommen, die Kunststoffgegenstände mit Laserbeschreibbarkeit ausstatten, ohne daß die Eigenschaften des Kunststoffes verschlechtert werden. Die erfindungsgemäße Formmasse für die Herstellung schwer entflammbarer Gegenstände mit einer Matrix aus einem Thermoplasten und mit darin dispergiertem teilchenförmigem Pigment ist dadurch gekennzeichnet, daß das Pigment lichtsensitiv ist und unter dem Einfluß von Laserlicht seine Farbe ändert und daß das Pigment ein Reaktionsprodukt wenigstens einer halogenfreien flammhemmenden organischen Stickstoffbase mit (i) wenigstens einem Mischsalz mit wenigstens zwei voneinander verschiedenen Kationen und/oder mit (ii) einem Gemisch salzartiger Verbindungen, die beim Erwärmen zu wenigstens einer salzartigen Verbindung mit wenigstens zwei verschiedenen Kationen, wie unter (i), umsetzbar sind, wobei in den Varianten (i) und (ii) wenigstens eines der Kationen aus einer Gruppe (A) der Elemente Ti, Cr, Mn, Fe, Co, Ni, Cu, Zn, Y, Zr, Nb, Mo, Ag, Sn, Sb, La, Pr, Ta, W und Ce ausgewählt ist und wenigstens ein weiteres Kation aus einer Gruppe (B) der Elemente der 3. bis 6. Periode der II. und III. Hauptgruppe, der 5. bis 6. Periode der IV- Hauptgruppe sowie der 4. bis 5. Periode der III. bis VIII. Nebengruppe und der Lanthaniden des Periodensystems der Elemente ausgewählt ist.

Als Matrixmaterial können alle bekannten Kunststoffe verwendet werden, die beispielsweise in Ullmanns Enzyklopädie der technischen Chemie (Band 15, Seite 457) beschrieben und für die Lasermarkierung auch bisher bereits verwendet wurden. Geeignete Kunststoffe sind z. B. Polyethylen, Polypropylen, Polyamid, Polyester, Polyphenylenoxid, Polyacetal, Polybutylenterephthalat, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyethyletherketon, Polyvinylchlorid und thermoplastisches Polyurethan.

Polyacetale im Sinne dieser Beschreibung sind Polymere, die hauptsächlich Oxymethylengruppen ($CH_2O-$) aufweisen. Sie umfassen hierbei Polyoxymethylen-Homopolymere, -Copolymere, -Terpolymere und -Blockcopolymere.

Polyester im Sinne dieser Beschreibung sind thermoplastische Polymere mit sich wiederholenden Estergruppen in der Hauptkette. Beispiele sind Polykondensationsprodukte der Naphthalindicarbonsäuren, Terephthalsäure, Isophthalsäure, Adipinsäure, Azelainsäure, Sebacinsäure, Dodecandisäure, Cyclohexandicarbonsäuren, Mischungen dieser Carbonsäuren und esterbildenden Derivate mit zweiwertigen Alkoholen wie Ethylenglykol, 1,3-Propandiol, 1,4-Butandiol, 1,4-Butendiol und 1,6-Hexandiol, 1,4-Hexandiol, 1,4-Cyclohexandiol, 1,4-Di-(hydroxymethyl)-cyclohexan, Bisphenol A, Neopentylglycol, Oligo- oder Polyethylenglykole, Oligo- oder Polypropylenglykole, Oligo- oder Poly-(tetramethylen)-glykole, Mischungen dieser Diole sowie esterbildenden Derivate derselben sowie mit weiteren möglichen Comonomeren.

Besonders bevorzugte Matrixkomponenten sind Polyethylenterephthalat, Polybutylenterephthalat und Polyether-Esterblockcopolymere.

Polyamide im Sinne dieser Beschreibung sind thermoplastische Polymere mit sich wiederholenden Säureamidgruppen in der Hauptkette. Sie umfassen sowohl Homopolymere des Amincarbonsäuretyps als auch des Diamin-Dicarbonsäuretyps als auch Copolymere mit weiteren möglichen AA-, BB- und AB-Comonomeren. Die verwendbaren Polyamide sind bekannt und zum Beispiel in der Encyclopedoa of Polymer Science and Engineering, Ausgabe 11, Seiten 315 bis 489, John Wiley & Sons, Inc., 1988, beschrieben.

Beispiele für Polyamide sind Polyhexamethylenadipinsäureamid, Polyhexamethyjenazelainsäureamid, Polyhexamethylensebacinsäureamid, Polyhexamethylendodekandisäureamid, Poly-11-aminoundekansäureamid und Bis-(p-amino-cyclohexyl)-methandodekansäureamid oder die durch Ringöffnung von Lactamen, z. B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Terephthalsäure, Isophthalsäure, Hexamethylendiamin und Caprolactam genannt.

Polyarylensulfide im Sinne dieser Beschreibung sind thermoplastische Polymere mit sich wiederholenden Schwefelgruppen in der weitgehend aromatischen Hauptkette. Sie umfassen sowohl Homopolymere als auch Copolymere.

Thermoplastische Polymere als Blendpartner im Sinne dieser Beschreibung können beliebige weitere teilkristalline, flüssigkristalline und amorphe Polymere sein.

Lichtsensitive Verbindungen im Sinne dieser Beschreibung sind organische oder anorganische salzartige Verbindungen mit den oben definierten Kombinationen unterschiedlicher Kationen oder Mischungen aus salzartigen Verbindungen mit den oben definierten Kombinationen unterschiedlicher Kationen, die unter dem Einfluß einer Laserlichtquelle an der belichteten Stelle ihre Farbe ändern.

Plastisches Polyurethan (PTU) ist aufgrund seiner hochwertigen mechanischen Eigenschaften und der kostengünstigen Verarbeitungsmethoden besonders geeignet. Thermoplastische Polyurethane sind seit langem aus zahlreichen Literaturveröffentlichungen und Patentschriften bekannt.

Das Pigment, welches in dem thermoplastischen Matrixmaterial fein verteilt vorliegen soll, besteht bei den mit (i) und (ii) bezeichneten Varianten aus einem Mischsalz mit wenigstens zwei voneinander verschiedenen Kationen bzw. zu diesen führenden noch nicht umgesetzten Vorstufen, die beim Erwärmen, beispielsweise beim Aufschmelzen des Pigments, ein in die Kategorie (i) fallendes Mischsalz mit wenigstens zwei voneinander verschiedenen Kationen ergeben.

Es ist äußerst überraschend, daß die Metallkomponenten, sei es als Mischsalz oder als Vorstufe hierzu, einerseits eine Verbesserung des Kontrasts bei der Laserbeschriftbarkeit oder -markierbarkeit und gleichzeitig eine Verbesserung der Flammschutzfähigkeit ergeben.

Die erfindungsgemäßen Effekte der oben geschilderten Art werden durch das Pigment erhalten, welches einerseits flammhemmende Eigenschaften hat und andererseits durch Absorption von Laserlicht die Laserbeschreibbarkeit ergibt. Dieses Pigment ist ein Reaktionsprodukt wenigstens einer halogenfreien flammhemmenden organischen Stickstoffbase mit einer der Komponenten gemäß den Abschnitten (i) und (ii). Die organische Stickstoffbase ist zweckmäßig Melamin oder ein Melaminderivat, wie Melamincyanurat, Melaminorthophosphat, Dimelaminorthophosphat, Melaminpyrrophosphat, Melaminpolyphosphat, Melaminborat, Melaminsalz von Teilphosphorsäureester, Salzen der Phosphoroxyverbindungen, Ammoniumpolyphosphat, Borphosphat und Kombinationen hiervon. Die verwendeten Flammschutzmittel können auch in Triazin-Polymeren, Melem, Melam, Harnstoff, Guanidin usw. verwendet werden.

Unter einer salzartigen Verbindung oder einem Salz versteht man hier im Sinne der Erfindung Verbindungen, die in Wasser wenigstens teilweise in Kationen und Anionen dissoziieren bzw. aus einem Säurerest und einem Basenrest bestehen.

Wenn andererseits hier von einer Farbveränderung die Rede ist, kann diese ein Umschlagen von einem Farbton in einen anderen, wie beispielsweise von Gelb nach Rot oder von Transparent nach Schwarz sein. Im Sinne der Erfindung soll unter diesem Begriff aber auch eine Helligkeitsveränderung, beispielsweise von Hellbraun nach Dunkelbraun oder auch eine Verfärbung des Kunststoffes verstanden werden.

Der Begriff "teilchenförmig" soll bedeuten, daß das Pigment in Form feiner fester Teilchen vorliegt, wobei sich quantitative Angaben auf die mittlere Teilchengröße ($d_{50}$) und auf die Teilchengröße der Primärteilchen beziehen. Die Größe der Primärteilchen liegt im Nanometer- bis Mikrometerbereich. Geeignete Primärteilchen haben mittlere Teilchengröße ($d_{50}$) kleiner als 10 $\mu$m, vorzugsweise kleiner als 5 $\mu$m.

Die Pigmente können ohne den Erfindungsgedanken zu verlassen, zusätzlich weitere Kationen, insbesondere solche von Elementen der 2. bis 5. Periode der I. Hauptgruppe enthalten. Auch ist es möglich, den Pigmenten zusätzlich anorganische Oxide und/oder weitere farbgebende Additive und/oder übliche, bestimmte Eigenschaften modifizierende Additive zuzusetzen, wie UV-Stabilisatoren, Stabilisatoren gegen Verwitterung, thermische und thermooxidative Angriffe, zur Verbesserung der hydrolytischen und azidolytischen Beständigkeit, Gleitmittel, Entformungshilfen, kristallisationsregulierende Substanzen und Nukleierungsmittel, Füllstoffe, Weichmacher und andere Zusatzstoffe.

Der mit Pigmenten nach der Erfindung erhaltene Farbunterschied kann als lokal unterschiedliche Leuchtdichte bei unterschiedlichen Lichtquellen, als lokal unterschiedliche Farbwerte z. B. im CIELab-System oder als lokal unterschiedliche Farbwerte im RGB System erfaßt werden.

Die Auswahl der Elemente erfolgt in der Regel so, daß diese im Wellenlängenbereich des zur Verfügung stehenden Laserlichts eine möglichst starke Absorption aufweisen.

Die Wellenlängenbereiche des eingesetzten Laserlichts sind grundsätzlich keinen Beschränkungen unterworfen. Geeignete Laser haben im allgemeinen eine Wellenlänge im Bereich von 157 nm bis 10,6 mm, vorzugsweise im Bereich von 532 nm bis 10,6 mm. Beispielsweise seien hier $CO_2$-Laser (10,6 mm) und Nd:YAG-Laser (1064 nm) oder gepulste UV-Laser erwähnt.

Typische Excimerlaser weisen folgende Wellenlänge auf: $F_2$-Excimerlaser (157 nm), ArF-Excimerlaser (193 nm), XeCl-Excimerlaser (308 nm), XeF-Excimerlaser (351 nm), frequenzvervielfachte Nd:YAG-Laser mit Wellenlängen von 532 nm (Frequenz verdoppelt) von 355 nm (Frequenz verdreifacht) oder 265 nm (Frequenz vervierfacht). Besonders bevorzugt werden Nd:YAG-Laser (1064 bzw. 532 nm) und $CO_2$-Laser eingesetzt. Die Energiedichten der erfindungsgemäß eingesetzten Laser liegen im allgemeinen im Bereich von 0,3 mJ/cm$^2$ bis 50 J/cm$^2$, vorzugsweise 0,3 mJ/cm$^2$ bis 10 J/cm$^2$. Bei der Verwendung von gepulsten Lasern liegt die Pulsfrequenz im allgemeinen im Bereich von 1 bis 30 kHz.

Lichtsensitive Verbindungen im Sinne dieser Beschreibung sind organische oder anorganische salzartige Verbindungen mit den oben definierten Kombinationen unterschiedlicher Kationen oder Mischungen aus salzartigen Verbindungen mit den oben definierten Kombinationen unterschiedlicher Kationen, die unter dem Einfluß einer Laserlichtquelle an der belichteten Stelle ihre Farbe ändern.

Diese Verbindungen können klassische Salze mit definierter Stöchiometrie aus einem oder mehreren Anionen mit mehreren, mindestens jedoch zwei von unterschiedlichen Elementen abgeleiteten Kationen sein, es kann sich aber auch um nicht stöchiometrisch zusammengesetzte Verbindungen handeln, die mindestens zwei von unterschiedlichen Elementen abgeleitete Kationen aufweisen.

Die Anionen unterliegen grundsätzlich keinen Beschränkungen, solange damit der Aufbau von Verbindungen mit Kationen von mindestens zwei unterschiedlichen Elementen möglich ist. Bevorzugt werden Anionen eingesetzt, die mindestens zwei unterschiedliche Elemente enthalten.

Besonders bevorzugte Komponenten weisen als Anionen Oxoanionen des Periodensystems, mit der Ausnahme von Phosphinaten und Diphosphinaten und/oder deren Polymeren, auf sowie die Anionen der organischen Carbonsäuren sowie der Kohlensäure, sofern sich mit ihnen Mischverbindungen mit mehreren Kationen realisieren lassen.

Bevorzugt sind solche Kombinationen, bei denen die unbelichtete Verbindung im Bereich der verwendeten Lichtwellenlänge absorbiert.

Bevorzugt sind weiterhin solche Kombinationen, bei denen durch Variation der Molverhältnisse der Kationen die Eigenfarbe der unbelichteten Verbindung eingestellt werden kann.

In einer Ausprägung der Erfindung weist die unbelichtete Komponente eine beliebige Eigenfarbe und die belichtete Komponente einen möglichst deutlichen farblichen Unterschied dazu auf. Im CIELab-System bedeutet dieses das Auftreten eines hohen Wertes für dE*, wobei

$$dE^* = 2\sqrt{(L^*_1 - L^*_2)^2 + (a^*_1 - a^*_2)^2 + (b^*_1 - b^*_2)^2}$$

bedeutet; dabei steht Index 1 für die unbelichtete, Index 2 für die belichtete Formmasse.

Bei dem CIELab-System handelt es sich um ein von der Internationalen Beleuchtungskommission (Commission Internationale d'Eclairage) 1976 festgelegten Farbraum, wobei L* = Helligkeit, a* = Rot-Grün-Farbinformation und b* = Gelb-Blau-Information bedeuten.

In einer bevorzugten Ausführungsform der Erfindung weist die unbelichtete Verbindung eine möglichst hohe Helligkeit (also einen möglichst hohen Helligkeitswert L* im CIELab-Farbraum) und eine möglichst geringe Eigenfarbe (also eine möglichst geringe Abweichung von der schwarz-weiß-Achse: betragsmäßig möglichst geringes a*, betragsmäßig möglichst geringes b*) auf. In diesem Fall soll die belichtete Verbindung eine möglichst geringe Helligkeit (möglichst niedriger Helligkeitswert L*) und dennoch eine möglichst geringe Eigenfarbe (betragsmäßig möglichst geringes a*, betragsmäßig möglichst geringes b*) aufweisen.

In einer anderen bevorzugten Ausführungsform der Erfindung weist die unbelichtet nente eine möglichst hohe Helligkeit (möglichst hoher Helligkeitswert L* im CIELab-Farbraum) und eine möglichst geringe Eigenfarbe (möglichst geringe Abweichung von der schwarz-weiß-Achse: betragsmäßig möglichst geringes a*, betragsmäßig möglichst geringes b*) auf. In diesem Fall soll die belichtete Komponente eine möglichst deutliche Eigenfarbe (betragsmäßig möglichst hohes a* und/oder b*) aufweisen.

In einer bevorzugten Ausführungsform der erfindungsgemäßen Zusammensetzung weisen die Anionen der obigen Komponente die allgemeine Formel $A_aO_o(OH)_y{}^{z-}$ auf, worin

A = drei- oder fünfwertiger Phosphor, vierwertiges Molybdän oder sechswertiges Wolfram bedeuten,

a, o und z unabhängig voneinander ganze Zahlen mit Werten von 1 - 20 bedeuten, und

y eine ganze Zahl mit Werten zwischen 0 - 10 ist.

In einer weiteren bevorzugten Ausführungsform der erfindungsgemäßen Zusammensetzung weist das Pigment mindestens eine Kombination aus zwei unterschiedlichen Elementen der Gruppe bestehend aus Kupfer, Zinn, Antimon und Eisen auf.

In einer besonders bevorzugten Ausführungsform der erfindungsgemäßen Zusammensetzung weist das Pigment Anionen der Phosphor(V)- und/oder Phosphor(III)-säure, deren Kondensationsprodukte oder gegebenenfalls mit weiteren Hydroxidionen und als Kationen Cu und Fe oder Cu und Sn oder Cu und Sb oder Sn und Fe auf.

Bevorzugt werden Metallsalze verwendet, die eine besonders hohe thermische Stabilität besitzen, so daß anhand der Einarbeitung des durch Dotierung hergestellten Kombinationsprodukts in das Polymer keine Zersetzung stattfindet. Verwendet werden Salze oder Liganden mit einer thermischen Stabilität von über 200°C (2% Gew.-Verlust), bevorzugt mit einer Stabilität von über 250°C (2% Gew.-% Verlust), besonders bevorzugt mit einer Stabilität von über 300°C (2 % Gew.-Verlust).

Lichtintensive Flammschutzmittelkombinationen werden durch Dotierung, Reaktion und Vermischen der organischen Stickstoffbasen mit den Metallverbindungen der Komponenten (i) oder (ii) erhalten. Unter Dotieren versteht man sowohl die Herstellung von Mischungen einer oder mehrerer der genannten festen Bestandteile im pulverförmigen Zustand wie auch das Vermischen einer oder mehrerer der erwähnten festen Bestandteile in gelöster oder suspendierter Form mit anschließendem Trocknen des pulverförmigen Produktes.

Die erfindungsgemäßen Produkte haben alle sowohl flammhemmende als auch laserbeschriftbare Eigenschaften.

Die Erfindung betrifft auch die Pigmente für die Herstellung gleichzeitig flammhemmender und laserbeschriftbarer Kunststoffgegenstände mit den oben für die Formmassen angegebenen Merkmalen. Gleichermaßen betrifft die Erfindung die Verwendung von Pigmenten mit den angegebenen Merkmalen zur Herstellung flammhemmender und gleichzeitig laserbeschriftbarer Kunststoffgegenstände, insbesondere solcher aus Thermoplasten.

Beispiel 1

Pigment für eine erfindungsgemäße Formmasse wurde wie folgt hergestellt:

Kupferhydroxid (0,1 mol) und Isocyanursäure (0,1 mol) werden in einem Mischer mit Wasser vorgelegt und unter Rühren vermengt. Dabei findet eine Neutralisationsreaktion mit Salzbildung statt. Anschließend wird Trizinnphosphat $Sn_3(PO_4)_2$ (1 mol) hinzugefügt. Nach 30 min werden Melamin (10 mol) und Cyanursäure (10 mol) im exakten Verhältnis 1:1 hinzugefügt. Die gesamte Mischung wird 1 h gerührt und anschließend bei 110°C unter Vakuum getrocknet.

Mit der folgenden Rezeptur wurde aus dem erhaltenen Pigment eine Formmasse nach der Erfindung erhalten. Für diese wurden die Flammbeständigkeit und Laserbeschriftbarkeit bestimmt.

Als Laser wurde ein im Handel üblicher Nd-YAG-Laser (Wellenlänge 1064 nm) verwendet. Die Kontrastwerte wurden mit Hilfe einer auf einem Mikroskop montierten Digitalkamera und einer Bildauswertungssoftware ermittelt. Die Flammbeständigkeit wurde mit Hilfe einer UL-Box nach UL 94 ermittelt. Die CTI-Werte wurden entsprechend der DIN IEC 60112/VDE 0303 Teil 1, RAL 7035 überprüft.

| | |
|---|---|
| Polyamid 6,6/6 (Molverhältnis 1:1) | 88 Gew.-% |
| Melamincyanurat (wie oben hergestellt) | 12 Gew.-% |
| UL94 | VO |
| Kontrast (K-Wert) | 4,2 |
| CTI | 520 |

Die dabei erhaltenen thermoplastischen Formmassen zeichnen sich sowohl durch ihre ausgezeichnete Flammbeständigkeit (selbstverlöschend) als auch durch hohe Kontrastwerte (K-Wert) bei der Laserbeschriftung aus.

Beispiel 2

Pigment für eine erfindungsgemäße Formmasse (i) wurde wie folgt hergestellt:

Ein 50 l Reaktor mit Rührwerk wird mit 29,25 l reinem Wasser gefüllt. Orthophosphorsäure (74,75 mol) wird unter Rühren bei Raumtemperatur zugesetzt. Wegen der exothermen Reaktion steigt die Temperatur im Reaktorinhalt an und wird bei 50°C für 10 min gehalten. Anschließend wird unter Rühren langsam Melamin (74,75 mol) zugegeben und ein Verklumpen verhindert. Nachdem eine homogene Suspension erhalten wurde, wird eine Mischung aus Kupferhydroxid (0,74 mol) und Eisen-II-phosphit (0,29 mol $Fe_3PO_3$) in die Suspension zugegeben. Die gesamte Mischung wird 1 h bei 100°C gerührt, anschließend die Temperatur angehoben und unter Vakuum getrocknet.

Das so gewonnene dotierte Melaminorthophosphat wurde in einem Ofen bei 340°C zu Melaminpolyphosphat umgesetzt. Das Produkt wurde anschließend auf eine Feinheit von 5 Micron vermahlen.

| | |
|---|---|
| Polybutylterephthalat | 76 Gew.-% |

(fortgesetzt)

| Melamincyanurat | 9 Gew.-% |
| Melaminpolyphosphat (wie oben hergestellt) | 15 Gew.-% |
| UL 94 | VO |
| Kontrast (K-Wert) | 4,3 |
| CTI | 530 V |

Auch diese Formmasse ergab ausgezeichnete Flammbeständigkeit und Laserbeschriftbarkeit (K-Wert).

**Patentansprüche**

1.  Formmasse für die Herstellung schwer entflammbarer Gegenstände mit einer Matrix aus einem Thermoplasten und mit darin dispergiertem teilchenförmigem Pigment, **dadurch gekennzeichnet, daß** das Pigment lichtsensitiv ist und unter dem Einfluß von Laserlicht seine Farbe ändert und daß das Pigment ein Reaktionsprodukt wenigstens einer halogenfreien flammhemmenden organischen Stickstoffbase mit

    (i) wenigstens einem Mischsalz mit wenigstens zwei voneinander verschiedenen Kationen und/oder mit
    (ii) einem Gemisch salzartiger Verbindungen, die beim Erwärmen zu wenigstens einer salzartigen Verbindung mit wenigstens zwei verschiedenen Kationen, wie unter (i), umsetzbar sind,

    wobei in den Varianten (i) und (ii) wenigstens eines der Kationen aus einer Gruppe (A) der Elemente Ti, Cr, Mn, Fe, Co, Ni, Cu, Zn, Y, Zr, Nb, Mo, Ag, Sn, Sb, La, Pr, Ta, W und Ce ausgewählt ist und wenigstens ein weiteres Kation aus einer Gruppe (B) der Elemente der 3. bis 6. Periode der II. und III. Hauptgruppe, der 5. bis 6. Periode der IV- Hauptgruppe sowie der 4. bis 5. Periode der III. bis VIII. Nebengruppe und der Lanthaniden des Periodensystems der Elemente ausgewählt ist.

2.  Formmasse nach Anspruch 1, **dadurch gekennzeichnet, daß** ihr Pigment eine mittlere Teilchengröße ($d_{50}$) kleiner als 10 $\mu$m, vorzugsweise kleiner als 5 $\mu$m hat.

3.  Formmasse nach Anspruch 1 oder 2, **dadurch gekennzeichnet, daß** sie neben den unterschiedlichen Kationen aus den Gruppen (A) und (B) weitere Kationen von Elementen der 2. bis 5. Periode der I. Hauptgruppe enthält.

4.  Formmasse nach einem der Ansprüche 1 bis 3, **dadurch gekennzeichnet, daß** ihr Pigment salzartige Verbindungen mit Oxoanionen des Periodensystems, mit der Ausnahme von Phosphinaten und Diphosphinaten und/oder von deren Polymeren, Anionen von organischen Carbonsäuren oder Anionen der Kohlensäure als Anionen enthält.

5.  Formmasse nach Anspruch 4, **dadurch gekennzeichnet, daß** ihr Pigment als Anionen phosphorhaltige Oxoanionen, insbesondere Cyanurat-, Phosphat-, kondensierte Phosphat-, Phosphonat-, Phosphit- und gemischte Hydroxid-Phosphat-Oxoanionen enthält.

6.  Formmasse nach einem der Ansprüche 1 bis 5, **dadurch gekennzeichnet, daß** die Anionen des Pigmentes die allgemeine Formel $A_aO_o(OH)_y^{z-}$ besitzen, worin fünfwertiger Phosphor, vierwertiges Molybdän oder sechswertiges Wolfram bedeuten, a, o und z unabhängig voneinander ganze Zahlen im Bereich von 1 bis 20 bedeuten und y eine ganze Zahl zwischen 0 und 10 ist.

7.  Formmasse nach einem der Ansprüche 1 bis 6, **dadurch gekennzeichnet, daß** die Kationen ihres Pigments aus Kupfer, Zinn, Antimon, Eisen und/oder Bor bestehen.

8.  Formmasse nach einem der Ansprüche 1 bis 7, **dadurch gekennzeichnet, daß** die Anionen der salzartigen Verbindungen aus Phosphor(V)-Säure und/oder Phosphor(III)-Säure oder deren Kondensationsprodukten, gegebenenfalls mit weiteren Hydroxylionen, und die Kationen aus Cu und Fe oder Cu und Sn oder Cu und Sb oder Sn und Fe bestehen.

9.  Formmasse nach einem der Ansprüche 1 bis 8, **dadurch gekennzeichnet, daß** die Verbindungen der Gruppen (A) und (B) so miteinander kombiniert sind, daß die unbelichtete Kombination dieser Verbindungen im Bereich der zu verwendenden Lichtwellenlänge absorbiert.

10. Formmasse nach einem der Ansprüche 1 bis 9, **dadurch gekennzeichnet, daß** sie als Zusatz mindestens ein sterisch gehindertes Phenol zusammen mit einer Phosphorverbindung enthält.

11. Formmasse nach einem der Ansprüche 1 bis 10, **dadurch gekennzeichnet, daß** ihre thermoplastische Matrix aus, gegebenenfalls glasfaserverstärktem, Polypropylen, Polyethylen, Polyamid, Polybutylenterephthalat, Polyethylenterephthalat, Polyester, Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyetherketon, Polyvinylchlorid, thermoplastischem Polyurethan und/oder deren Copolymeren und/oder Mischungen besteht.

12. Formmasse nach einem der Ansprüche 1 bis 11, **dadurch gekennzeichnet, daß** die halogenfreie organische Stickstoffbase Melamin, Melamincyanurat, Melaminorthophosphat, Dimelaminorthophosphat, Melaminpyrrophosphat, Melaminpolyphosphat, Melaminborat, Melaminsalz von Phosphorsäureteilestern, weitere Salze der III- und V-wertigen Phosphoroxyverbindungen, Ammoniumpolyphosphat, Borphosphat und Gemischen hiervon sowie gegebenenfalls Gemischen derselben mit Synergisten, wie Pentaerythrit, Dipentaerythrit, THEIC, Triacinpolymeren, Harnstoff, Guanidin, Melem oder Melam besteht.

13. Verwendung eines Pigments mit den in den vorangegangenen Ansprüchen definierten Merkmalen zur Herstellung schwer entflammbarer und laserbeschriftbarer Kunststoffgegenstände, insbesondere solcher aus Thermoplasten.

14. Pigment mit den in den vorangegangenen Ansprüchen definierten Merkmalen für die Herstellung gleichzeitig schwer entflammbarer und laserbeschriftbarer Kunststoffgegenstände.

**Claims**

1. A moulding material for the production of highly flame resistant articles with a matrix formed from a thermoplastic and with a particulate pigment dispersed therein, **characterized in that** the pigment is light-sensitive and changes colour under the influence of laser light and **in that** the pigment is a reaction product of at least one halogen-free flame retardant organic nitrogen base with

   (i) at least one mixed salt with at least two different cations and/or with
   (ii) a mixture of salt type compounds which on heating can be transformed into at least one salt type compound with at least two different cations, as in (i);

   wherein in variations (i) and (ii), at least one of the cations is selected from a group (A) of elements Ti, Cr, Mn, Fe, Co, Ni, Cu, Zn, Y, Zr, Nb, Mo, Ag, Sn, Sb, La, Pr, Ta, W and Ce and at least one further cation is selected from a group (B) of elements from periods 3 to 6 of main groups II and III, periods 5 and 6 of main group IV and periods 4 and 5 of subgroups III to VIII and the lanthanides of the periodic table of the elements.

2. A moulding material according to claim 1, **characterized in that** its pigment has a mean particle size ($d_{50}$) of less than 10 $\mu$m, preferably less than 5 $\mu$m.

3. A moulding material according to claim 1 or claim 2, **characterized in that** in addition to the various cations from group (A) and (B), it contains further cations from elements in periods 2 to 5 of main group I.

4. A moulding material according to one of claims 1 to 3, **characterized in that** its pigment contains, as the anions, salt type compounds with oxoanions from the periodic system with the exception of phosphinates and diphosphinates and/or those polymers, anions of organic carboxylic acids or anions of carbonic acid.

5. A moulding material according to claim 4, **characterized in that** its pigment contains, as the anions, phosphorus-containing oxoanions, in particular cyanurate-, phosphate-, condensed phosphate-, phosphonate-, phosphite- and mixed hydroxide-phosphate-oxoanions.

6. A moulding material according to one of claims 1 to 5, **characterized in that** the anions of the pigment have general formula $A_aO_o(OH)_y{}^{z-}$, wherein A represents penta-valent phosphorus, tetra-valent molybdenum or hexa-valent tungsten, a, o and z independently represent whole numbers in the range 1 to 20 and y represents a whole number between 0 and 10.

7. A moulding material according to one of claims 1 to 6, **characterized in that** the cations of its pigment consist of copper, tin, antimony, iron and/or boron.

8. A moulding material according to one of claims 1 to 7, **characterized in that** the anions of the salt type compounds consist of phosphorus (V) acid and/or phosphorus (III) acid or condensation products thereof, if appropriate with further hydroxyl ions, and the cations consist of Cu and Fe or Cu and Sn or Cu and Sb or Sn and Fe.

9. A moulding material according to one of claims 1 to 8, **characterized in that** the compounds of groups (A) and (B) are so combined together that the non-illuminated combination of these compounds absorbs in the region of the wavelength of the light to be used.

10. A moulding material according to one of claims 1 to 9, **characterized in that** it contains, as an additive, at least one sterically hindered phenol together with a phosphorus compound.

11. A moulding material according to one of claims 1 to 10, **characterized in that** its thermoplastic matrix consists of optionally glass fibre-reinforced polypropylene, polyethylene, polyamide, polybutylene terephthalate, polyethylene terephthalate, polyester, polyphenylene oxide, polyacetal, polymethacrylate, polyoxymethylene, polyvinylacetal, polystyrene, acrylic-butadiene-styrene (ABS), acrylonitrile-styrene-acrylic ester (ASA), polycarbonate, polyether sulphone, polyether ketone, polyvinylchloride, thermoplastic polyurethane and/or copolymers thereof and/or mixtures thereof.

12. A moulding material according to one of claims 1 to 11, **characterized in that** the halogen-free organic nitrogen base consists of melamine, melamine cyanurate, melamine orthophosphate, dimelamine orthophosphate, melamine pyrophosphate, melamine polyphosphate, melamine borate, a melamine salt of a phosphorus acid partial ester, further salts of III- and V-valent phosphoroxy compounds, ammonium polyphosphate, boron phosphate and mixtures thereof as well as mixtures thereof with synergistic agents such as pentaerythritol, dipentaerythritol, THEIC, triacin polymers, urea, guanidine, melem or melam.

13. Use of a pigment having the characteristics as defined in one of the previous claims, for the production of highly flame resistant and laser-writable plastic articles, in particular those formed from thermoplastics.

14. Pigment having the characteristics as defined in one of the previous claims, for the production of simultaneously highly flame resistant and laser-writable plastic articles.

**Revendications**

1. Matière moulable servant à fabriquer des objets difficilement inflammables comprenant une matrice composée d'une matière thermoplastique et comprenant un pigment particulaire dispersé dans celle-ci, **caractérisée en ce que** le pigment est photosensible et change de couleur sous l'effet d'une lumière laser et **en ce que** le pigment est un produit issu de la réaction d'au moins une base azotée organique ignifuge sans halogènes avec

   (i) au moins un mélange de sulfate d'ammonium et de nitrate d'ammonium comprenant au moins deux cations différents l'un de l'autre et/ou avec
   (ii) un mélange de liaisons salines, qui, lorsqu'elles sont réchauffées, peuvent être transformées en au moins une liaison saline comprenant au moins deux différents cations, comme ci-dessous (i),

   sachant que dans les variantes (i) et (ii) au moins un des cations est sélectionné à partir d'un groupe (A) des éléments Ti, Cr, Mn, Fe, Co, Ni, Cu, Zn, Y, Zr, Nb, Mo, Ag, Sn, Sb, La, Pr, Ta, W et Ce et au moins un autre cation est sélectionné à partir d'un groupe (B) des éléments des périodes 3 à 6 des groupes principaux II et III, des périodes 5 à 6 du groupe principal IV ainsi que des périodes 4 à 5 des groupes secondaires III à VIII et des lanthanides de la table périodique des éléments.

2. Matière moulable selon la revendication 1, **caractérisée en ce que** son pigment présente une taille de particule moyenne ($d_{50}$) inférieure à 10 $\mu$m, de préférence inférieure à 5 $\mu$m.

3. Matière moulable selon la revendication 1 ou 2, **caractérisée en ce qu'**elle contient, outre les différents cations issus des groupes (A) et (B), d'autres cations d'éléments des périodes 2 à 5 du groupe principal I.

4. Matière moulable selon l'une quelconque des revendications 1 à 3, **caractérisée en ce que** son pigment contient comme anions des liaisons salines comprenant des oxoanions de la table périodique, à l'exception de phosphinates et de diphosphinates et/ou leurs polymères, anions d'acides carboxyliques organiques ou anions de l'acide carbonique.

5. Matière moulable selon la revendication 4, **caractérisée en ce que** son pigment contient comme anions des oxoanions phosphorés, en particulier des oxoanions cyanurates, phosphates, phosphates, phosphonates, phosphites condensés et hydroxydes et phosphates mélangés.

6. Matière moulable selon l'une quelconque des revendications 1 à 5, **caractérisée en ce que** les anions du pigment possèdent la formule générale $A_aO_o(OH)_y^{z-}$, dans laquelle du phosphore pentavalent, du molybdène tétravalent ou du tungstène hexavalent sont désignés, a, o et z désignent indépendamment les uns des autres des nombres entiers dans la plage de 1 à 20 et y est un nombre entier compris entre 0 et 10.

7. Matière moulable selon l'une quelconque des revendications 1 à 6, **caractérisée en ce que** les cations de son pigment sont constitués de cuivre, d'étain, d'antimoine, de fer et/ou de bore.

8. Matière moulable selon l'une quelconque des revendications 1 à 7, **caractérisée en ce que** les anions des liaisons salines sont constitués d'acide de phosphore (V) et/ou d'acide de phosphore (III) ou de leurs produits de condensation, éventuellement avec d'autres ions hydroxyles, et les cations sont constitués de Cu et de Fe ou de Cu et de Sn ou de Cu et de Sb ou de Sn et de Fe.

9. Matière moulable selon l'une quelconque des revendications 1 à 8, **caractérisée en ce que** les liaisons des groupes (A) et (B) sont combinées les unes aux autres de sorte que la combinaison non impressionnée de ces liaisons absorbe dans la plage de la longueur d'onde lumineuse à utiliser.

10. Matière moulable selon l'une quelconque des revendications 1 à 9, **caractérisée en ce qu'**elle contient en tant qu'additif au moins un phénol à empêchement stérique conjointement avec une liaison phosphorée.

11. Matière moulable selon l'une quelconque des revendications 1 à 10, **caractérisée en ce que** sa matrice thermoplastique est constituée de polypropylène, de polyéthylène, de polyamide, de polybutylènetéréphtalate, de polyéthylènetéréphtalate, de polyester, d'oxyde de polyphényle, de polyacétal, de polyméthacrylate, de polyoxyméthylène, de polyacétate de vinyle, de polystyrol, d'acryle-butadiène-styrène (ABS), d'acrylonitrile-styrène-acrylester (ASA), de polycarbonate, de polyéther sulfone, de polyéther cétone, de chlorure de polyvinyle, de polyuréthane thermoplastique éventuellement renforcés par des fibres de verre et/ou leurs copolymères et/ou mélanges.

12. Matière moulable selon l'une quelconque des revendications 1 à 11, **caractérisée en ce que** la base azotée organique sans halogènes est constituée de mélamine, de cyanurate de mélamine, d'orthophosphate de mélamine, d'orthophosphate de dimélamine, de pyrrophosphate de mélamine, de polyphosphate de mélamine, de borate de mélamine, de sel de mélamine d'esters partiels d'acide phosphorique, d'autres sels des liaisons phosphoroxy trivalentes et pentavalentes, de polyphosphate d'ammonium, de phosphate de bore et leurs mélanges ainsi qu'éventuellement des mélanges de ceux-ci avec des synergistes, comme le pentaérythrite, le dipentaérythrite, le THEIC, les polymères triacine, l'urée, la guanidine, le mélème ou le mélame.

13. Utilisation d'un pigment comprenant les caractéristiques définies dans les revendications précédentes servant à fabriquer des objets en matière plastique difficilement inflammables et pouvant être marqués au laser, en particulier ceux en thermoplastique.

14. Pigment comprenant les caractéristiques définies dans les revendications précédentes servant à fabriquer des objets en matière plastique à la fois difficilement inflammables et pouvant être marqués au laser.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10145093 A
- WO 0002869 A
- US 6706785 A
- EP 0764683 A

### In der Beschreibung aufgeführte Nicht-Patentliteratur

- Ullmanns Enzyklopädie der technischen Chemie. vol. 15, 457
- Encyclopedoa of Polymer Science and Engineering. John Wiley & Sons, Inc, 1988, 315-489